# EUROPEAN PATENT SPECIFICATION

(11) **EP 4 659 340 B1**
(45) Date of publication and mention of the grant of the patent: **16.09.2026**
(21) Application number: 24702205.6
(22) Date of filing: 25.01.2024
(51) Int. Cl.: H02K 1/18, H02K 5/167, H02K 7/10, H02K 7/14, H02K 21/24, B60N 2/02, B60N 2/14, H02K 1/2795

(54) **SWIVELING DEVICE FOR VEHICLE SEAT**
SCHWENKVORRICHTUNG FÜR FAHRZEUGSITZE
DISPOSITIF DE PIVOTEMENT DESTINÉ À UN SIÈGE DE VÉHICULE

(30) Priority: 30.01.2023 IT 202300001398
(43) Date of publication of application: 10.12.2025
(73) Proprietor: MFI Italy Engineering S.r.l., 20121 Milano (IT)
(72) Inventor: ÜSTÜNBERK, Can, 10095 Grugliasco (TO) (IT); HIREMATH, Prasanna, 10095 Grugliasco (TO) (IT); ADAMO, Giorgio, 10095 Grugliasco (TO) (IT); MALINCONICO, Andrea, 10095 Grugliasco (TO) (IT)
(74) Representative: Robba, Pierpaolo
(86) International application number: PCT/IB2024/050698
(87) International publication number: WO 2024/161245

(56) References cited:
- WO-A1-2016/071742
- DE-A1- 10 236 372
- DE-A1- 102017 007 418
- US-A1- 2017 248 146
- US-A1- 2023 017 545

## Description

### Technical Field

The present invention relates to a swiveling device for a vehicle seat.

### Background Art

Vehicle seats provided with a swiveling device are known and widespread.

A swiveling device allows the vehicle seat to rotate about an axis that is substantially perpendicular to the vehicle floor.

In general, a swiveling device allows a rotation of the corresponding vehicle seat over an angle of at least 90°, thus allowing the vehicle seat to pass from a first position, in which the seat is oriented towards the traveling direction of the vehicle, to a second position, in which the seat is oriented towards the adjacent vehicle door.

In this way, the swiveling device facilitates the entry of the driver or passenger into the cockpit and/or the exit therefrom.

It will be evident that swiveling devices are particularly useful for individuals with limited mobility, especially with restricted lower body strength and movement capability.

Accordingly, they can be introduced into the vehicle cockpit as an aftermarket adaptation to an existing passenger vehicle, replacing the original seat anchoring arrangement to the vehicle floor.

More in detail, swiveling devices are generally composed of two parallel plates, which are inserted between the original vehicle seat and the vehicle floor in place of the original seat anchoring arrangement, and which are rotatable relative to each other, so that a lower plate coupled to the vehicle floor can be kept stationary and an upper plate coupled to the seat cushion frame can rotate relative to the lower plate.

Such plates are usually separated by an off-center bearing allowing the seat to rotate from the first position, in which the seat is oriented towards the traveling direction of the vehicle, to the second position, in which the seat is oriented towards the adjacent vehicle door, and at the same time to move the seat so that it protrudes over the door sill.

In order to selectively allow or prevent rotation of the upper plate relative to the lower plate, a locking pin (for instance a vertically oriented locking pin) is usually provided, and a control lever is used for switching the locking pin from a locking position (in which relative rotation of the plates is prevented) to an unlocking position (in which relative rotation of the plates is allowed).

Once the locking pin has been switched to the unlocking position, rotation of the upper plate relative to the lower plate is mechanically or electromechanically driven.

DE102017007418 discloses a vehicle seat, comprising a seat cushion and a seat backrest, which is provided with a sliding device, for moving at least the seat cushion in the longitudinal direction of the motor vehicle along a pair of rails, and with a swiveling device, for rotating at least the seat cushion relative to the vehicle floor about a vertical axis. The sliding device and the swiveling device are driven by conventional electric motors.

Since the integrity of the seat is crucial for occupant protection in a collision, vehicle adaptation companies need to ensure that the adaptation does not compromise the safety of the seat or weaken the surrounding structure of the vehicle.

However, since there are no applicable standards, a level of self-regulation is required.

In addition, swiveling devices according to prior art have a bulky structure and a remarkable weight, and their assembly and installation are complex and time-consuming operations.

Furthermore, swiveling devices of known type are usually based on a mechanical cooperation between the lower and upper plates. For instance, such plates are made as mutually meshing toothed plates.

This leads to a poor reliability and to a high risk of malfunctioning, especially in presence of dust and dirt.

The main object of the present invention is to obviate to the above-mentioned drawbacks, by providing a swiveling device with a simple and light structure, allowing to make the assembly and installation operations easier and quicker.

Another object of the present invention is to provide a swiveling device with an improved reliability.

These and other objects are achieved by a swiveling device as claimed in the appended claims.

### Summary of Invention

The swiveling device according to the invention exploits electromagnetic forces for obtaining the relative rotation between a lower plate, intended to be attached to the floor of a vehicle cockpit, and an upper plate, intended to be attached to the frame of a seat cushion.

According to the invention, a plurality of coils are attached to one plate of the swiveling device, while a plurality of magnets are attached to the other plate of the swiveling device.

According to a preferred embodiment of the invention, a plurality of coils are attached to the stationary lower plate, while a plurality of magnets are attached to the rotating upper plate.

It is evident that this embodiment is particularly advantageous, since the coils, which have to be fed with an electric current, are on the stationary plate of the swiveling device.

Nevertheless, according to an alternative embodiment of the invention a plurality of magnets could be attached to the stationary lower plate, while a plurality of coils could be attached to the rotating upper plate.

By adequately feeding the coils, an electromagnetic thrust and a resulting torque can be generated, which torque makes the upper plate rotate relative to the lower plate.

According to a preferred embodiment of the invention, the coils are arranged so as to achieve the configuration of a three-phase motor winding which is fed with an alternate current and the magnets are correspondingly arranged in an alternate setting: by tuning with an appropriate control law each phase of the three-phase winding, a desired thrust along a tangential direction can be obtained for driving the upper plate in rotation relative to the lower plate.

In the swiveling device according to the invention, while the electromagnetic thrust is used for generating the relative rotation between the plates, the electromagnetic repulsion is advantageously exploited for generating a force in the axial direction that counteracts the weight of a user sitting on the vehicle seat, and that can preferably withstand the weight of a user sitting on the vehicle seat.

Devices including a first plate carrying a plurality of coils and a second plate carrying a plurality of magnets are known form the art.

By way of example, US 2023/017545 discloses an actuator for generating vibration that includes a driving coil, a first magnet facing an upper surface of the driving coil and a second magnet facing a lower surface of the driving coil. If a power of appropriate size and direction is applied to the driving coil, a magnetic force is generated at the upper and lower portions of the driving coil at the same time, and the generated magnetic force is simultaneously transmitted to the first magnet and the second magnet, respectively, so that the first magnet and the second magnet rotate with an increased driving force, thereby enhancing the vibration force by rotational drive.

US 2006/105877 relates to a servo driver for motor vehicles which includes an electromechanical energy converter having a disc rotor comprising an armature disc through which a current flows. Magnets are mounted on one or both sides next to the disc rotor. When the electrical conductors which are formed or are mounted on the disc rotor are energized, a torque is produced through the influence of the magnetic field, whereby this torque causes the disc rotor to rotate.

US 2017/248146 discloses a blower assembly for a vehicle seat. The blower assembly comprises a housing and a stator, which is coupled to the housing and comprises a plurality of driving coils. The blower assembly further comprises a rotor rotatably coupled to the housing about a rotational axis, with the rotor comprising a plurality of permanent magnets arranged to generate a flux concentrated on the driving coils. The blower assembly further comprises an impeller coupled to the rotor to rotate about the rotational axis to generate a flow of air through the passage.

WO 2016/071742 describes an actuating device for actuating a cable having a motor assembly which comprises a rotor and a printed circuit board. The rotor has a plurality of alternatively polarized magnets, and the printed circuit board has a plurality of coils. The plurality of coils creates a magnetic field when supplied with a current, which, in turn, causes the rotor to rotate.

However, none of the devices disclosed in the above-documents discloses or suggests to exploiting at the same time both the electromagnetic thrust and the electromagnetic repulsion generated between the magnets and the coils when the latter are energized.

### Brief Description of Drawings

Further features and advantages of the invention will become more evident from the detailed description of a preferred embodiment thereof, given by way of non limiting example, with reference to the attached drawings, in which:
**Fig.1**

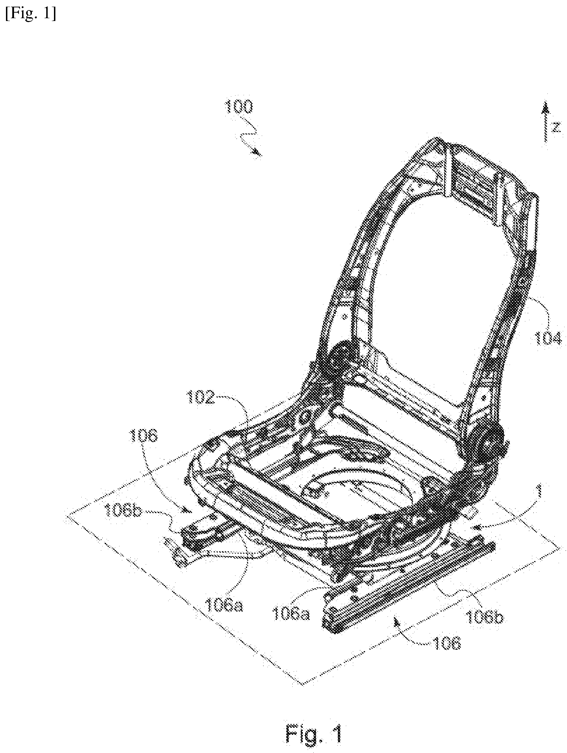

   [Fig.1] is a schematic perspective view of a vehicle seat provided with a swiveling device according to the invention;
**Fig.2**

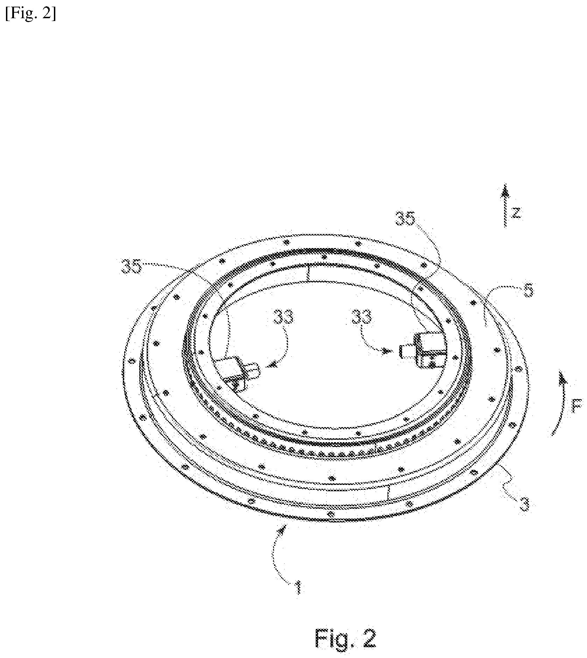

   [Fig.2] is a perspective view of the swiveling device according to the invention;
**Fig.3**

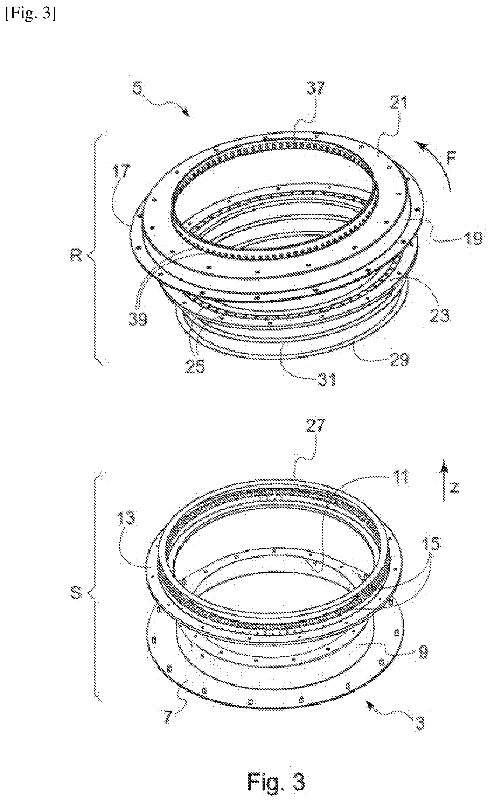

   [Fig.3] is an exploded view of the swiveling device of [Fig.2];
**Fig.4a**

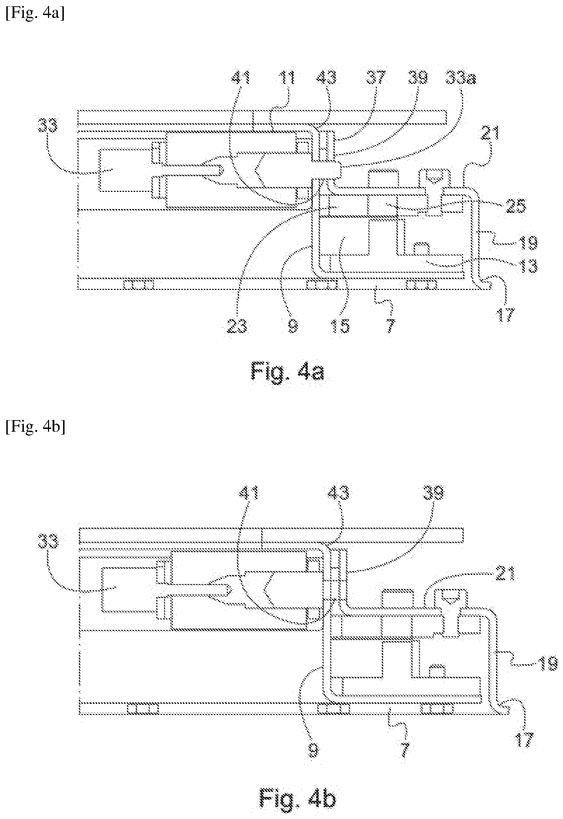

   [Fig.4a] shows, in a cross-sectional view, a detail of the swiveling device of Figures 2 and 3 relating to the locking system of such swiveling device, shown in a first configuration;
**Fig.4b**
   [Fig.4b] shows, in a cross-sectional view, the detail of [Fig.4a], shown in a second, different configuration.

### Description of Embodiments

A vehicle seat 100 is schematically shown in [Fig.1].

The vehicle seat 100 generally includes a seat cushion, including a seat cushion frame 102 and seat cushion foam body (not shown) mounted to the seat cushion frame, and a seat backrest, including a seat backrest frame 104 and seat backrest foam body (not shown) mounted to the seat backrest frame.

In a known manner, the seat cushion frame 102 is mounted on a pair of tracks 106. In detail, the seat cushion frame 102 is fastened to the upper rails 106a of the tracks 106, while the lower rails 106b of the tracks 106 are fixedly fastened to the vehicle floor 200, said upper rails being slidably connected to said lower rails.

The vehicle seat 100 is provided with a swiveling device 1, allowing the vehicle seat 100 to rotate relative to the vehicle floor 200 about a vertical direction Z, i.e. a direction that is substantially perpendicular to the vehicle floor 200.

The swiveling device 1 is interposed between the seat cushion frame 102 and the vehicle floor 200 and includes a stationary (i.e. non-rotating) portion and a rotating portion.

In the shown embodiment, the stationary portion of the swiveling device 1 is connected to the upper rails 106a of the tracks 106, while the rotating portion of said swiveling device is connected to seat cushion frame 102.

Thanks to this arrangement, the swiveling device 1 as a whole can move with the vehicle seat 100, when, for instance, said vehicle seat slides along the tracks 106; at the same time, the vehicle seat 100 can rotate relative to the vehicle floor (for instance, when a user enters the vehicle cockpit or exits therefrom).

In an alternative embodiment, the stationary portion of the swiveling device could be connected to the vehicle floor, while the rotating portion of said swiveling device could be connected to the lower rails of the tracks of the sliding device.

With this arrangement, the sliding device as a whole could rotate with the vehicle seat, when, for instance, said vehicle seat rotates thanks to the swiveling device; at the same time, the vehicle seat could slide along the rails of the sliding device.

The swiveling device according to the invention is shown in greater detail in Figures 2 and 3.

The swiveling device 1 includes a lower plate or stationary plate 3 and an upper plate or rotating plate 5.

The lower and upper plates 3, 5 preferably have an overall substantially annular shape.

The lower plate 3 includes a peripheral annular rim 7, a cylindrical wall 9, upwardly projecting form the inner edge of the annular rim 7, and an annular lip 11, inwardly projecting from the upper edge of the cylindrical wall 9.

A first supporting ring 13 can therefore be fitted around the cylindrical wall 9 and fastened to the annular rim 7, for instance by screws.

A first annular seal (not shown) can also be provided between the lower plate 3 and the first supporting ring 13 for compensating mechanical tolerances and geometrical irregularities.

The first annular seal can be made, for instance, of rubber.

A plurality of coils 15 are mounted on the first supporting ring 13, along its circumference.

The coils 15 are preferably mounted along the whole circumference of the first supporting ring 13 and they are densely and evenly distributed along the whole circumference of the first supporting ring 13.

The coils 15 are made, for instance, of copper.

The coils 15 are preferably made so as to withstand working temperature up to 155°C (NEMA insulation class F).

The lower plate 3 and the first supporting ring 13 carrying the coils 15 form the stationary (i.e. non-rotating) portion S of the swiveling device 1.

The upper plate 5 includes a peripheral annular rim 17, a cylindrical wall 19, upwardly projecting from the inner edge of the annular rim 17, and an annular cover 21, inwardly projecting from the upper edge of the cylindrical wall 19.

A second supporting ring 23 can therefore be fitted inside the cylindrical wall 19 and fastened to the annular cover 21, for instance by screws.

A second annular seal 31 can also be provided between the upper plate 5 and the second supporting ring 23 for compensating mechanical tolerances and geometrical irregularities.

The second annular seal 31 can be made, for instance, of rubber.

A plurality of magnets 25 are mounted on the second supporting ring 23, along its circumference.

The magnets 25 are preferably mounted along the whole circumference of the second supporting ring 23 and they are densely evenly distributed along the whole circumference of the second supporting ring 23.

The magnets 25 are, for instance, neodymium magnets, such as N42M magnets.

The magnets 25 are preferably made so as to withstand working temperature up to 100°C.

The upper plate 5 and the second supporting ring 23 carrying the magnets 25 form the rotating portion R of the swiveling device 1.

The inner diameter of the annular cover 21 of the upper plate 5 is substantially the same as or slightly larger than the diameter of the cylindrical wall 9 of the lower plate 3, so that the upper plate 5 can be fitted onto the lower plate 3.

The height of the cylindrical wall 19 of the upper plate 5 is substantially the same as or slightly larger than the sum of the thickness of the assembly consisting of the first supporting ring 13 and the coils 15 carried thereby and the thickness of the assembly consisting of the second supporting ring 23 and the magnets 25 carried thereby.

As a result, when the upper plate 5 is fitted on the lower plate 3, the second supporting ring 23 is superimposed to the first supporting ring 13 and the coils 15 face the magnets 25 along an axial direction (in this respect, see also Figures 4a, 4b)

The swiveling device 1 further includes a feeding system (not shown) for supplying the coils 15 with an electric current, and a control unit (not shown) for controlling the electric current fed to said coils.

The feeding system of the swiveling device can be advantageously integrated with or connected to the electric system of the vehicle on which the swiveling device is mounted.

In this way, the arrangement of an electric motor is obtained, in which the motor stator is formed by the stationary portion S of the swiveling device 1 and the motor rotor is formed by the rotating part R of the swiveling device.

Advantageously, the coils 15 can be grouped in a plurality of subsets of coils and the control unit is configured to feed each subset of coils autonomously and independently from the other subsets of coils.

In a preferred embodiment of the invention, the coils 15 are grouped in a plurality of subsets of coils so that a three-phase motor winding is obtained, and the control unit is configured for tuning each phase separately.

By feeding the coils with an electric current, an electromagnetic thrust, which is oriented along a tangential direction F relative to the perimeters of the first and second supporting rings 13, 23, is generated; and an electromagnetic repulsive force, which is oriented along a direction Z perpendicular to the planes on which the first and second supporting rings 13, 23 lie, is generated.

The electromagnetic thrust allows the upper plate to rotate relative to the lower plate.

Such electromagnetic thrust is controlled by tuning the supply of electric current to each subset of coils.

The electromagnetic repulsive force acts as a magnetic suspension, counteracting the normal force applied by the weight of the seat and of the user occupying the seat, thus reducing the friction at the contact area between the stationary portion and the rotary portion of the swiveling device.

In order to further reduce such friction, the first and second supporting rings 13, 23 can be provided with a respective annular interface element 27, 29 made of a low friction coefficient material.

The stationary portion S and the rotary portion R of the swiveling device 1 preferably contact each other only at the interface elements 27, 29.

For instance, polytetrafluoroethylene (PTFE), also known as Teflon, can be used for manufacturing the annular interface elements 27, 29.

A locking mechanism is preferably provided for selectively locking and unlocking rotation of the rotating portion R of the swiveling device 1 relative to the stationary portion S of said swiveling device 1.

Thanks to the provision of such locking mechanism, the lower and upper plates 3, 5 of the swiveling device 1 are firmly kept in a given position when said swiveling device is at rest. In addition, rotation of the swiveling device can be prevented, even if the coils are inadvertently fed with an electric current.

In the preferred embodiment of the invention shown in the Figures, such locking mechanism includes one or more radial locking pins 33. More particularly, two locking pins 33 arranged at 180° with respect to each other are provided.

The locking mechanism of the swiveling device 1 is also shown in greater detail in Figures 4a and 4b.

Each locking pin 33 is mounted on a flange 35 fastened to the swiveling device, more particularly to the cylindrical wall 9 of the lower plate 3.

At the location of each locking pin 33, the cylindrical wall 9 of the lower plate 3 is provided with corresponding through-hole 41, allowing the tip 33a of the locking pin to pass through said cylindrical wall 9.

The upper plate 5 is provided with a raised crown 37, upwardly projecting from the inner edge of the annular cover 21 and provided with a plurality of through-holes 39.

The through-holes 39 are preferably provided along the whole circumference of the crown 37 of the upper plate and they are densely and evenly distributed along the whole circumference of the crown 37 of the upper plate.

The overall height of the cylindrical wall 9 of the lower plate 3 is substantially the same as or larger than the sum of height of the cylindrical wall 19 of the upper plate 5 and of the crown 37 of said upper plate.

The through-hole(s) 41 in the cylindrical wall 9 is/are at the same height as the through-holes 39 in the crown 37.

A through-hole 39 of the crown 37 of the upper plate can therefore be brought into alignment (in the radial direction) with the through-hole 41 of the cylindrical wall 9 of the lower plate, so that the tip 33a of a locking pin 33 can pass through both said through-hole 39 of the crown 37 of the upper plate and said through-hole 41 of the cylindrical wall 9 of the lower plate, thus preventing said upper plate from rotating relative to said lower plate.

Each locking pin 33 is controllable for being switched from a locking configuration, in which its tip 33a passes through both the through-hole 39 of the raised crown 37 of the upper plate and the through-hole 41 of the cylindrical wall 9 of the lower plate (see [Fig.4a]), to an unlocking configuration, in which its tip 33a is retracted from both said through-hole 39 of said raised crown 37 of the upper plate and said through-hole 41 of the cylindrical wall 9 of the lower plate (see [Fig.4b]).

In this latter, unlocking configuration, rotation of the upper plate relative to the lower plate is allowed.

In a preferred embodiment of the invention, switching of the locking pin 33 between the locking configuration and the unlocking configuration is controlled by a solenoid: when the solenoid is de-energized, the locking pin 33 is in the locking configuration; when the solenoid is energized, the locking pin is brought to the unlocking configuration.

It can be noted that using radial locking pins allows to reduce the overall size of the swiveling device (compared to, for instance, swiveling devices using axial locking pins), since the free space inside the annular plates 3, 5 of the device can be advantageously exploited for mounting such locking pins.

A control element, such a control push-button, can be operated by the user for switching the locking pin(s) 33 to the unlocking configuration (by energizing the respective solenoid(s)) and for simultaneously supplying the coils 15 with an adequately tuned electric current.

As a result, the electromagnetic repulsive force generated between the coils 15 and the magnets 25 will act as a magnetic suspension, counteracting the weight of the seat and of the user, and the electromagnetic thrust generated between the coils 15 and the magnets 25 will generate a torque making the upper plate 5 of the swiveling device rotate relative to the lower plate 3 of said swiveling device and, as a consequence, making the seat rotate relative to the vehicle floor.

Once the new desired position is reached, by releasing the control push-button supply of electric current to the coils will be stopped and, at the same time, the locking pin(s) will be switched to the locking configuration (by de-energizing the respective solenoid(s)).

It will be evident from the above that the invention reaches the objects set forth above, since the construction and operation of the swiveling device are easy and reliable and mechanical cooperation between stationary components and rotating components of the swiveling device is avoided.

It will be also evident that the preferred embodiment shown in the figures and described in detail here above has been given by way of non-limiting example and many variants and modification within the reach of the person skilled in the art are possible if not thereby departing from the scope of the invention as defined by the appended claims.

## Claims

1. Swiveling device (1) for a vehicle seat, **characterized in that** the swiveling device includes a lower plate (3) and an upper plate (5) fitted on said lower plate, wherein one of said plates (3, 5) carries a plurality of coils (15) and the other one of said plates (5, 3) carries a plurality of magnets (25), said coils (15) facing said magnets (25) along an axial direction, wherein said swiveling device further includes a feeding system for supplying said coils (15) with an electric current, and a control unit for controlling the electric current fed to said coils (15), whereby the electromagnetic thrust generated when said coils are supplied with said electric current is used for generating a relative rotation between said lower and upper plates (3,5), while the electromagnetic repulsion generated when said coils are supplied with said electric current is used for generating a force in the axial direction that counteracts the weight of a user sitting on the vehicle seat.

2. Swiveling device (1) according to claim 1, wherein said lower and upper plates (3, 5) have an overall substantially annular shape and one of said plates (3, 5) carries a first supporting ring (13), said coils (15) being arranged along the circumference of said first supporting ring, and the other one of said plates (5, 3) carries a second supporting ring (23), said magnets (25) being arranged along the circumference of said second supporting ring.

3. Swiveling device (1) according to claim 2, wherein said coils (15) are densely and evenly distributed along the whole circumference of said first supporting ring (13) and said magnets (25) are densely and evenly distributed along the whole circumference of said second supporting ring (23).

4. Swiveling device (1) according to claim 2 or 3, wherein a first annular seal is provided between said one of said plates (3, 5) and said first supporting ring (13), and a second annular seal is provided between said other one of said plates (5, 3) and said second supporting ring (23).

5. Swiveling device (1) according to any of the preceding claims, wherein said plates (3,5) are provided with respective interface elements (27, 29) made of a low friction coefficient material, said plates contacting each other only at said interface elements (27, 29).

6. Swiveling device (1) according to any of the preceding claims, wherein said coils (15) are grouped in a plurality of subsets of coils and said control unit is configured to control said feeding system for feeding each subset of coils autonomously and independently from the other subsets of coils.

7. Swiveling device (1) according to claim 6, wherein said coils (15) are arranged in a three-phase winding configuration and said control unit is configured to control said feeding system for feeding each phase autonomously and independently from the other phases.

8. Swiveling device (1) according to any of the preceding claims, wherein said swiveling device includes a locking mechanism for selectively allowing or preventing rotation of said upper plate (5) relative to said lower plate (3).

9. Swiveling device (1) according to claim 8, wherein said locking mechanism includes one or more radial locking pins (33) that are switchable from a locking configuration, in which they engage both said plates and prevent a relative rotation therebetween, to an unlocking configuration, in which they do not engage both said plates and allow a relative rotation therebetween.

10. Swiveling device (1) according to any of the preceding claims, wherein said lower plate (3) carries said plurality of coils (15) and said upper plates (5) carries said plurality of magnets (25).

11. Vehicle seat (100) comprising a seat cushion, including a seat cushion frame (102) and seat cushion foam body mounted to the seat cushion frame, and a seat backrest, including a seat backrest frame (104) and seat backrest foam body mounted to the seat backrest frame, and further comprising a pair of tracks (106), each including a lower rail (106b) and an upper rail (106a), slidably connected to said lower rail, wherein said vehicle seat is provided with a swiveling device (1) according to any of claims 1 - 10 and wherein said lower plate (3) is fastened to said upper rails (106a) of said tracks (106) and said upper plate (5) is fastened to said seat cushion frame (102).

12. Vehicle seat (100) comprising a seat cushion, including a seat cushion frame (102) and seat cushion foam body mounted to the seat cushion frame, and a seat backrest, including a seat backrest frame (104) and seat backrest foam body mounted to the seat backrest frame, and further comprising a pair of tracks (106), each including a lower rail (106b) and an upper rail (106a), slidably connected to said lower rail, wherein said vehicle seat is provided with a swiveling device (1) according to any of claims 1 - 10 and wherein said upper plate (5) is fastened to said lower rails (106b) of said tracks (106).

## Patentansprüche

1. Schwenkvorrichtung (1) für einen Fahrzeugsitz, **dadurch gekennzeichnet, dass** die Schwenkvorrichtung eine untere Platte (3) und eine an der unteren Platte angebrachte obere Platte (5) aufweist, wobei eine der Platten (3, 5) mehrere Spulen (15) trägt und die andere der Platten (5, 3) mehrere Magnete (25) trägt, wobei die Spulen (15) den Magneten (25) in einer axialen Richtung zugewandt sind, wobei die Schwenkvorrichtung zudem ein Versorgungssystem zur Versorgung der Spulen (15) mit elektrischem Strom und eine Steuereinheit zum Steuern des den Spulen (15) zugeführten Stroms aufweist, wobei der elektromagnetische Schub, der erzeugt wird, wenn die Spulen mit elektrischem Strom versorgt werden, verwendet wird, um eine relative Drehbewegung zwischen der unteren und der oberen Platte (3, 5) zu bewirken, während die elektromagnetische Abstoßung, die erzeugt wird, wenn die Spulen mit dem elektrischen Strom versorgt werden, verwendet wird, um eine Kraft in der axialen Richtung zu erzeugen, die dem Gewicht eines Benutzers entgegenwirkt, der auf dem Fahrzeugsitz sitzt.

2. Schwenkvorrichtung (1) nach Anspruch 1, wobei die unteren und oberen Platten (3, 5) insgesamt im Wesentlichen ringförmig sind und eine der Platten (3, 5) einen ersten Stützring (13) trägt, wobei die Spulen (15) entlang des Umfangs des ersten Stützrings angeordnet sind, und die andere der Platten (5, 3) einen zweiten Stützring (23) trägt, wobei die Magnete (25) entlang des Umfangs des zweiten Stützrings angeordnet sind.

3. Schwenkvorrichtung (1) nach Anspruch 2, wobei die Spulen (15) dicht und gleichmäßig entlang des gesamten Umfangs des ersten Stützrings (13) verteilt sind und die Magnete (25) dicht und gleichmäßig entlang des gesamten Umfangs des zweiten Stützrings (23) verteilt sind.

4. Schwenkvorrichtung (1) nach Anspruch 2 oder 3, wobei eine erste Ringdichtung zwischen einer der Platten (3, 5) und dem ersten Stützring (13) angeordnet ist und eine zweite Ringdichtung zwischen der anderen der Platten (5, 3) und dem zweiten Stützring (23) angeordnet ist.

5. Schwenkvorrichtung (1) nach einem der vorstehenden Ansprüche, wobei die Platten (3, 5) mit entsprechenden Zwischenelementen (27, 29) versehen sind, die aus einem Material mit niedrigem Reibungskoeffizienten hergestellt sind, wobei die Platten einander nur an den Zwischenelementen (27, 29) berühren.

6. Schwenkvorrichtung (1) nach einem der vorstehenden Ansprüche, wobei die Spulen (15) in mehreren Untergruppen von Spulen gruppiert sind und die Steuereinheit dafür ausgelegt ist, das Versorgungssystem zum Speisen jeder Untergruppe von Spulen selbstständig und unabhängig von den anderen Untergruppen von Spulen zu steuern.

7. Schwenkvorrichtung (1) nach Anspruch 6, wobei die Spulen (15) in einer Dreiphasenwicklungskonfiguration angeordnet sind und die Steuereinheit dafür ausgelegt ist, das Versorgungssystem zum Speisen jeder Phase autonom und abhängig von den anderen Phasen zu steuern.

8. Schwenkvorrichtung (1) nach einem der vorstehenden Ansprüche, wobei die Schwenkvorrichtung einen Verriegelungsmechanismus aufweist, um selektiv Drehungen der oberen Platte (5) relativ zur unteren Platte (3) zuzulassen oder zu verhindern.

9. Schwenkvorrichtung (1) nach Anspruch 8, wobei der Verriegelungsmechanismus einen oder mehrere radiale Verriegelungsstifte (33) aufweist, die zwischen einer Verriegelungskonfiguration, in der sie in beiden Platten eingreifen und eine Relativbewegung zwischen ihnen verhindern, und einer Entriegelungskonfiguration, in der sie nicht in beide Platten eingreifen und eine Relativbewegung zwischen ihnen ermöglichen.

10. Schwenkvorrichtung (1) nach einem der vorstehenden Ansprüche, wobei die untere Platte (3) mehrere Spulen (15) trägt und die obere Platte (5) mehrere Magnete (25) trägt.

11. Fahrzeugsitz (100) mit einem Sitzkissen, das einen Sitzkissenrahmen (102) und einen an dem Sitzkissenrahmen angebrachten Sitzkissenschaumkörper aufweist, und mit einer Sitzrückenlehne, die einen Sitzrückenlehnenrahmen (104) und einen an dem Sitzrückenlehnenrahmen angebrachten Sitzrückenlehnenschaumkörper aufweist, und zusätzlich mit einem Paar Bahnen (106), die jeweils eine untere Schiene (106b) und eine gleitend mit der unteren Schiene verbundene obere Schiene (106a) aufweist, wobei der Fahrzeugsitz mit einer Schwenkvorrichtung (1) nach einem der Ansprüche 1 bis 10 versehen ist und wobei die untere Platte (3) an der oberen Schiene (106a) der Bahn (106) befestigt ist und die obere Platte (5) an dem Sitzkissenrahmen (102) befestigt ist.

12. Fahrzeugsitz (100) mit einem Sitzkissen, das einen Sitzkissenrahmen (102) und einen an dem Sitzkissenrahmen angebrachten Sitzkissenschaumkörper aufweist, und mit einer Sitzrückenlehne, die einen Sitzrückenlehnenrahmen (104) und einen an dem Sitzrückenlehnenrahmen angebrachten Sitzrückenlehnenschaumkörper aufweist, und zusätzlich mit einem Paar Bahnen (106), die jeweils eine untere Schiene (106b) und eine gleitend mit der unteren Schiene verbundene obere Schiene (106a) aufweist, wobei der Fahrzeugsitz mit einer Schwenkvorrichtung (1) nach einem der Ansprüche 1 bis 10 versehen ist und wobei die obere Platte (5) an den unteren Schienen (106b) der Bahn (106) befestigt ist.

## Revendications

1. Dispositif de pivotement (1) pour un siège de véhicule, **caractérisé en ce que** le dispositif de pivotement inclut une plaque inférieure (3) et une plaque supérieure (5) rapportée sur la plaque inférieure, dans lequel l'une des plaques (3, 5) porte une pluralité de bobines (15) et l'autre des plaques (5, 3) porte une pluralité d'aimants (25), les bobines (15) étant en regard des aimants (25) selon une direction axiale, dans lequel le dispositif de pivotement inclut en outre un système d'alimentation pour alimenter les bobines (15) en un courant électrique, et une unité de commande pour commander le courant électrique délivré aux bobines (15), moyennant quoi la poussée électromagnétique générée lorsque les bobines sont alimentées par le courant électrique est utilisée pour générer une rotation relative entre les plaques inférieure et supérieure (3, 5), tandis que la répulsion électromagnétique générée lorsque les bobines sont alimentées par le courant électrique est utilisée pour générer une force selon la direction axiale qui s'oppose au poids d'un utilisateur assis sur le siège de véhicule.

2. Dispositif de pivotement (1) selon la revendication 1, dans lequel les plaques inférieure et supérieure (3, 5) présentent une forme d'ensemble sensiblement annulaire et l'une des plaques (3, 5) porte un premier anneau de support (13), les bobines (15) étant agencées le long de la circonférence du premier anneau de support, et l'autre des plaques (5, 3) porte un second anneau de support (23), les aimants (25) étant agencés le long de la circonférence du second anneau de support.

3. Dispositif de pivotement (1) selon la revendication 2, dans lequel les bobines (15) sont réparties de manière dense et uniforme le long de toute la circonférence du premier anneau de support (13) et les aimants (25) sont répartis de manière dense et uniforme le long de toute la circonférence du second anneau de support (23).

4. Dispositif de pivotement (1) selon la revendication 2 ou 3, dans lequel un premier joint annulaire est prévu entre ladite une des plaques (3, 5) et le premier anneau de support (13), et un second joint annulaire est prévu entre ladite autre des plaques (5, 3) et le second anneau de support (23).

5. Dispositif de pivotement (1) selon l'une quelconque des revendications précédentes, dans lequel les plaques (3, 5) sont pourvues d'éléments d'interface respectifs (27, 29) réalisés en un matériau à faible coefficient de frottement, les plaques étant en contact l'une avec l'autre uniquement au niveau des éléments d'interface (27, 29).

6. Dispositif de pivotement (1) selon l'une quelconque des revendications précédentes, dans lequel les bobines (15) sont regroupées en une pluralité de sous-ensembles de bobines et l'unité de commande est configurée pour commander le système d'alimentation afin d'alimenter chaque sous-ensemble de bobines de manière autonome et indépendante des autres sous-ensembles de bobines.

7. Dispositif de pivotement (1) selon la revendication 6, dans lequel les bobines (15) sont agencées selon une configuration d'enroulement triphasé et l'unité de commande est configurée pour commander le système d'alimentation afin d'alimenter chaque phase de manière autonome et indépendante des autres phases.

8. Dispositif de pivotement (1) selon l'une quelconque des revendications précédentes, dans lequel le dispositif de pivotement inclut un mécanisme de verrouillage pour permettre ou empêcher sélectivement la rotation de la plaque supérieure (5) par rapport à la plaque inférieure (3).

9. Dispositif de pivotement (1) selon la revendication 8, dans lequel le mécanisme de verrouillage inclut une ou plusieurs goupilles de verrouillage radiales (33) qui sont commutables d'une configuration de verrouillage, dans laquelle elles viennent en prise avec les deux plaques et empêchent une rotation relative entre celles-ci, à une configuration de déverrouillage, dans laquelle elles ne viennent pas en prise avec les deux plaques et permettent une rotation relative entre celles-ci.

10. Dispositif de pivotement (1) selon l'une quelconque des revendications précédentes, dans lequel la plaque inférieure (3) porte la pluralité de bobines (15) et la plaque supérieure (5) porte la pluralité d'aimants (25).

11. Siège de véhicule (100) comprenant une assise, incluant une armature d'assise (102) et un corps en mousse d'assise monté sur l'armature d'assise, et un dossier, incluant une armature de dossier (104) et un corps en mousse de dossier monté sur l'armature de dossier, et comprenant en outre une paire de glissières (106), incluant chacune un rail inférieur (106b) et un rail supérieur (106a), relié de manière coulissante au rail inférieur, dans lequel le siège de véhicule est pourvu d'un dispositif de pivotement (1) selon l'une quelconque des revendications 1 à 10 et dans lequel la plaque inférieure (3) est fixée aux rails supérieurs (106a) des glissières (106) et la plaque supérieure (5) est fixée à l'armature d'assise (102).

12. Siège de véhicule (100) comprenant une assise, incluant une armature d'assise (102) et un corps en mousse d'assise monté sur l'armature d'assise, et un dossier, incluant une armature de dossier (104) et un corps en mousse de dossier monté sur l'armature de dossier, et comprenant en outre une paire de glissières (106), incluant chacune un rail inférieur (106b) et un rail supérieur (106a), relié de manière coulissante au rail inférieur, dans lequel le siège de véhicule est pourvu d'un dispositif de pivotement (1) selon l'une quelconque des revendications 1 à 10 et dans lequel la plaque supérieure (5) est fixée aux rails inférieurs (106b) des glissières (106).
